# EUROPÄISCHE PATENTSCHRIFT

(11) **EP 1 775 263 B1**
(45) Veröffentlichungstag und Bekanntmachung des Hinweises auf die Patenterteilung: **30.06.2010**
(21) Anmeldenummer: 06120164.6
(22) Anmeldetag: 06.09.2006
(51) Int. Cl.: C01B 33/107

(54) **Verfahren und Vorrichtung zur Hydrierung von Chlorsilanen**
Process and apparatus for the hydrogenation of chlorosilanes
Méthode et dispositif pour l'hydrogénation de chlorosilanes

(30) Priorität: 29.09.2005 DE 102005046703
(43) Veröffentlichungstag der Anmeldung: 18.04.2007
(73) Patentinhaber: Wacker Chemie AG, 81737 München (DE)
(72) Erfinder: Pätzold, Uwe, 84489 Burghausen (DE); Reisbeck, Anton, 84533 Haiming (DE); Surner, Manfred, 84371 Triftern (DE)
(74) Vertreter: Potten, Holger

(56) Entgegenhaltungen:
- EP-A- 0 294 047
- WO-A2-2006/081980
- DE-A1- 2 739 258
- DE-A1- 3 024 320

## Beschreibung

Die Erfindung betrifft ein Verfahren und eine Vorrichtung zur Hydrierung von Chlorsilanen.

Verfahren zur Hydrierung von Chlorsilanen bei Temperaturen > 600°C sind bekannt. Beispielsweise hat die Hydrierung von Siliciumtetrachlorid (STC) zu Trichlorsilan (TCS) eine große Bedeutung, da bei der CVD-Abscheidung von Halbleiter-Silicium große Mengen STC als Nebenprodukt anfallen und das STC mit diesen Verfahren wieder in TCS, das Ausgangsmaterial für die CVD-Abscheidung von Halbleiter-Silicium, umgewandelt werden kann. Diese Verfahren werden beispielsweise durch US 5422088 (Burgie et al.), US 3933985 (Rogers), US 4217334 (Weigert et al.), US 4536642 (Hamster et al.) sowie durch die in diesen Schriften zitierte Literatur beschrieben.

Für alle diese Verfahren wird Grafit auf Grund seiner besonderen mechanischen, elektrischen und chemischen Eigenschaften als Konstruktionswerkstoff für die Reaktorbauteile, Isoliermaterial und die Heizelemente verwendet. US 3645686 (Tucker) erkannte, dass die Verwendung von Grafitelektroden Verunreinigungen, z. B. Bor, Phosphor, Arsen und Antimon, in das Halbleiter-Produkt einbringen kann. EP 0294047 (McCormick) erkannte, dass der Kontakt von Grafit mit Wasserstoff bei > 500°C zur Bildung von Kohlenwasserstoffen führen kann, welche zum Eintrag von kohlenstoffhaltigen Verunreinigungen (Methylsilanen) in das Produkt führt. Um den Eintrag von Verunreinigungen zu vermeiden, wurde vorgeschlagen, die Grafit-Bauteile mit Siliciumcarbid (SiC) zu beschichten. Die Abscheidung von SiC-Schichten kann dabei mit den bekannten CVD-Verfahren, beispielsweise wie in US 3459504 (Bracken) oder DE 2379258 (Sirtl) beschrieben, erfolgen.

US 4668493, 4702960, 4373006, 4737348, sowie EP 1454670 beschreiben Reaktoren auf der Basis von mit SiC beschichtetem Kohlenstoffmaterial, die für Reaktionen bei hohen Temperaturen in Anwesenheit von Chlorsilanen verwendet werden.
Ausgehend von diesen Erkenntnissen entwickelte DE 4317905 (Burgie et al.) einen verbesserten Reaktor zur Hydrierung von Chlorsilanen bei Temperaturen > 600°C. Diese Schrift beschreibt eine Reaktionskammer und Heizelemente, welche aus SiCbeschichtetem Kohlenstofffasermaterial bestehen. Durch die Reaktionskammer wird ein Chlorsilan/Wasserstoff-Gemisch geleitet. Die Heizelemente sind außerhalb der Reaktionskammer angeordnet und kommen nicht mit dem Reaktionsgemisch in Kontakt. Das Aufheizen des Reaktionsgemisches erfolgt über die Wände der Reaktionskammer. Dabei müssen die Heizelemente und Reaktorwände Temperaturen von 1600°C erreichen, um die für die Hydrierung von STC bevorzugte Temperatur von 800 - 1200°C in der Reaktionskammer einzuhalten. Dieses Verfahren benötigt somit einen höheren Energieeintrag als für die Reaktion nötig wäre. Mit höherer Reaktortemperatur treten weitere unerwünschte Effekte, wie hohe thermische Beanspruchung der Bauteile und Heizelemente, verstärkte Korrosion der Bauteile durch chemischen Angriff von Wasserstoff, Chlorsilanen und HCl sowie die Abscheidung von Silicium an unerwünschten Stellen auf.

DE 30 24 320 offenbart eine Vorrichtung zur Durchführung eines Verfahrens zur Hydrierung von chlorsilanen.

DE 27 39 258 offenbart ein Verfahren zur Aufbringung einer SiC Schutzschicht auf Kohlenstoffformkörper, dadurch gekennzeichnet, daß die Beschichtung bei einer Temperatur von 1000 bis 1350°C stattfindet.

Der Erfindung liegt die Aufgabe zu Grunde, ein Verfahren zur Hydrierung von Chlorsilanen zur Verfügung zu stellen, welches einen Eintrag von Verunreinigungen in die Reaktion vermeidet und welches energieeffizienter oder einfacher handhabbar ist als bekannte Verfahren, die derartige Verunreinigungen vermeiden.

Die Aufgabe wird gelöst durch ein Verfahren zur Hydrierung eines Chlorsilans der allgemeiner Formel Rₙ Si Cl₄₋ₙ wobei R Wasserstoff bedeutet und n 0, 1, 2 oder 3 ist in einem Reaktor umfassend eine Reaktionskammer mit einer Oberfläche, die mit dem Chlorsilan in Kontakt kommt und ein durch direkten Stromdurchgang beheiztes Heizelement mit einer Oberfläche, die mit dem Chlorsilan in Kontakt kommt, wobei die Reaktionskammer und das Heizelement aus Graphit bestehen, dadurch gekennzeichnet, dass in einem ersten Verfahrensschritt ein Chlorsilan der allgemeinen Formel Rₙ Si Cl₄ wobei R ein Wasserstoff bedeutet und n 0, 1, 2 und 3 ist sowie Wasserstoff mit der Oberfläche der Reaktionskammer und der Oberfläche des Heizelements derart in Kontakt gebracht wird, dass sich auf der Oberfläche der Reaktionskammer und der Oberfläche des Heizelements in situ eine SiC-Beschichtung bildet und in einem zweiten Verfahrensschritt eine Hydrierung des Chlorsilans durch ein Erhitzen eines Chlorsilan / Wasserstoff-Gemischs in der Reaktionskammer mittels des Heizelements erfolgt, wobei der erste Verfahrensschritt bei einer Reaktionstemperatur durchgeführt wird, die höher ist als die Reaktionstemperatur im zweiten Verfahrensschritt.

Besonders bevorzugt handelt es sich bei dem Chlorsilan somit um Tetrachlorsilan.

Besonders bevorzugt handelt es sich um das Chlorsilan, welches im zweiten Verfahrensschritt als Edukt eingesetzt wird.

Das erfindungsgemäße Verfahren ermöglicht die Kombination zweier bekannter, voneinander unabhängiger Verfahren, nämlich das Beschichten von Grafitbauteilen und die Hydrierung eines Chlorsilans, in einem Reaktor. Da beide Verfahrensschritte im gleichen Reaktor stattfinden, ohne dass der Reaktor umgebaut werden muss, wird zusätzlicher Aufwand vermieden.

Das erfindungsgemäße direkte Inkontaktbringen der Heizelemente mit eine Si Chlorsilan bewirkt eine in situ-Beschichtung der Heizelemente, der Reaktorwandung und ggf. weiterer Konstruktionseinbauten im Bereich der Reaktionszone innerhalb des Reaktors.

Diese in-situ gebildete SiC Schicht bildet eine chemisch inerte Schutzschicht, reduziert den chemischen Angriff der Reaktionsgase auf die Reaktoroberfläche bzw. die Heizeroberfläche und verringert unerwünschte Nebenreaktionen, beispielsweise die Bildung von Kohlenwasserstoffen, Methylchlorsilanen und die Rückbildung von TCS zu STC in kälteren Bereichen der Reaktionszone.

Das erfindungsgemäße Verfahren ermöglicht im Vergleich zur einstufigen Verfahrensweise, wie sie z. B. aus US 5422088 oder US 4536642 bekannt ist, längere Reaktorstandzeiten, einen geringeren Eintrag von Kontaminationen und damit verbunden eine höhere Reinheit der Reaktionsprodukte sowie höhere Reaktionsausbeuten. Die geringere Kontamination mit Verunreinigungen, beispielsweise B- und P-Verbindungen und Methylchlorsilanen führt auch zu einem geringeren apparativen und energetischen Aufwand für den anschließenden Reinigungsprozess der Reaktionsprodukte, der vorzugsweise mittels Destillation durchgeführt wird.

Vorteilhafterweise können als Chlorsilan im ersten Verfahrensschritt auch silanhaltige Nebenanfallprodukte, wie beispielsweise Dichlorsilan aus der Trichlorsilansynthese oder der Abscheidung von polykristallinem Silicium mittels des Siemens Prozesses oder Abfallprodukte der genannten Prozesse, da diese Verbindungen so wirtschaftlich vorteilhaft genutzt werden, anstatt entsorgt werden zu müssen.

Der im ersten Verfahrensschritt benötigte Wasserstoff wird vorzugsweise in Form von reinem Wasserstoff eingesetzt. Es ist jedoch ebenso möglich, den Wasserstoff in Form eines wasserstoffhaltigen Abgases, wie es bei der Trichlorsilansynthese oder der Abscheidung von polykristallinem Silicium mittels des Siemens Prozesses anfällt, einzusetzen. Es ist dabei möglich unaufgereinigten Wasserstoff aus diesen Prozessen, welcher noch HCl und Chlorsilane enthält, zu verwenden.

Die Si-haltige Verbindung und der Wasserstoff werden dem Reaktor in einem Molverhältnis (Silan:Wasserstoff) von 2:1 bis 1:10, vorzugsweise in einem Molverhältnis 2:1 bis 1:2, zugeführt.

Die Beschichtung der Bauteile findet bei Reaktortemperaturen von > 1000°C, vorzugsweise im Temperaturbereich 1000 - 1600°C, statt. Wesentlich für das Verfahren ist, dass die Temperatur in diesem Beschichtungsschritt höher liegt als im nachfolgenden Hydrierschritt. Dieser Verfahrensschritt wird bei Drücken von 1 - 20 bar, vorzugsweise von 1 - 5 bar, durchgeführt. Vorzugsweise wird der erste Verfahrenschritt bei einem geringeren Reaktordruck als die Hydrierreaktion durchgeführt, da sich ein tieferer Druck günstig für die Schichtbildung auswirkt.

Die Ausbildung der SiC-Beschichtung lässt sich indirekt über die Veränderung des elektrischen Widerstandes der Heizelemente ermitteln, da SiC einen höheren Widerstand aufweist als das Basismaterial Grafit. Dies ermöglicht eine Regelung und Steuerung des Beschichtungsprozesses über eine Messung des elektrischen Widerstandes der Heizelemente.

Abhängig von der gewünschten Schichtdicke werden die Reaktionsparameter, worunter vorzugsweise die Temperatur, der Druck im Reaktor, die Edukt-Zusammensetzung und die Beschichtungsdauer (in der Regel 1 - 7 Tage) zu verstehen sind, gewählt.

Nach Abschluss der in situ-Beschichtung mit SiC im ersten Verfahrensschritt kann der Reaktor ohne technische Umbauten auf die Reaktionsparameter des sich anschließenden zweiten Verfahrensschritts, die Hydrierreaktion, umgestellt werden.

Vorzugsweise wird der Reaktor während der Hydrierreaktion mit der gleichen Eduktzusammensetzung wie in dem Beschichtungsschritt betrieben. Wurde beispielsweise in dem Beschichtungsschritt STC und reiner Wasserstoff verwendet, so wird im Hydrierschritt vorzugsweise ebenfalls STC und reiner Wasserstoff verwendet.

Der Hydrierschritt erfolgt vorzugsweise bei einer Temperatur von 700 - 1400°C, vorzugsweise bei 900 - 1200°C. Da der Hydierschritt in der Regel druckunabhängig ist, kann diese Reaktion in einem weiten Druckbereich erfolgen, vorzugsweise bei 5 - 20 bar.

Der Hydrierschritt wird vorzugsweise bei einer niedrigeren Temperatur und einem höheren Druck als der vorherige Beschichtungsschritt durchgeführt.

In der Hydrierreaktion können andere Edukte eingesetzt werden als im Beschichtungsschritt. Vorzugsweise werden STC, oder Chlordisilane eingesetzt. Besonders bevorzugt werden im Beschichtungsschritt und in der Hydrierreaktion die gleichen Edukte eingesetzt.

Je nach Reinheitsanforderungen an das hydrierte Produkt können hier auch verschiedene Wasserstoffquellen genutzt werden. So wird man für die Herstellung von TCS für Halbleiteranwendungen vorzugsweise reinen Wasserstoff oder aufgereinigten Wasserstoff aus den Abgasen der TCS-Synthese oder der Abscheidung von polykristallinem Silicium mittels des Siemens Prozesses verwenden.

Die Edukte Chlorsilan und Wasserstoff werden im Hydrierschritt vorzugsweise in einem Verhältnis eingesetzt, bei dem der Wasserstoff im Überschuss vorliegt. Besonders bevorzugt ist ein Verhältnis Wasserstoff:Chlorsilan von 1,5:1 bis 5:1.

Ein Vorteil des erfindungsgemäßen Verfahrens im Vergleich zum Stand der Technik ergibt sich aus der nicht mehr notwendigen räumlichen Abtrennung der Heizelemente von der Reaktionszone. Dadurch wird der Konstruktionsaufwand geringer, und ein effizienterer Energieeintrag auf das Produkt ist gewährleistet.

Durch die gezielte in-situ-Beschichtung produktberührter Bauteile im ersten Verfahrensschritt werden alle Bauteile, welche normalerweise von der korrosiven Atmosphäre angegriffen werden, mit einer Schutzschicht versehen. Dies führt zu einer Standzeitverlängerung der betroffenen Bauteile und zu einem verringerten Eintrag von Kontaminationen in das Zielprodukt, da eine Reaktion der Grafitbauteile mit den Reaktionsgasen nicht mehr stattfinden kann. Die unkontrollierte Abscheidung von Silicium auf den Heizelementen und/oder Grafitbauteilen im zweiten Verfahrensschritt führt infolge der Beschichtung der Bauteile mit SiC im ersten Verfahrensschritt auch bei großen Temperaturschwankungen im Reaktor nicht mehr zu den früher beobachteten Rissen oder Brüchen der Bauteile.

Weiterhin werden durch die in-situ-Beschichtung der Bauteile von Grafit katalysierte, unerwünschte Reaktionen, z. B. die Rückreaktion von TCS zu STC in kälteren Bereichen der Reaktionszonen, vermieden, da SiC katalytisch inaktiv ist.

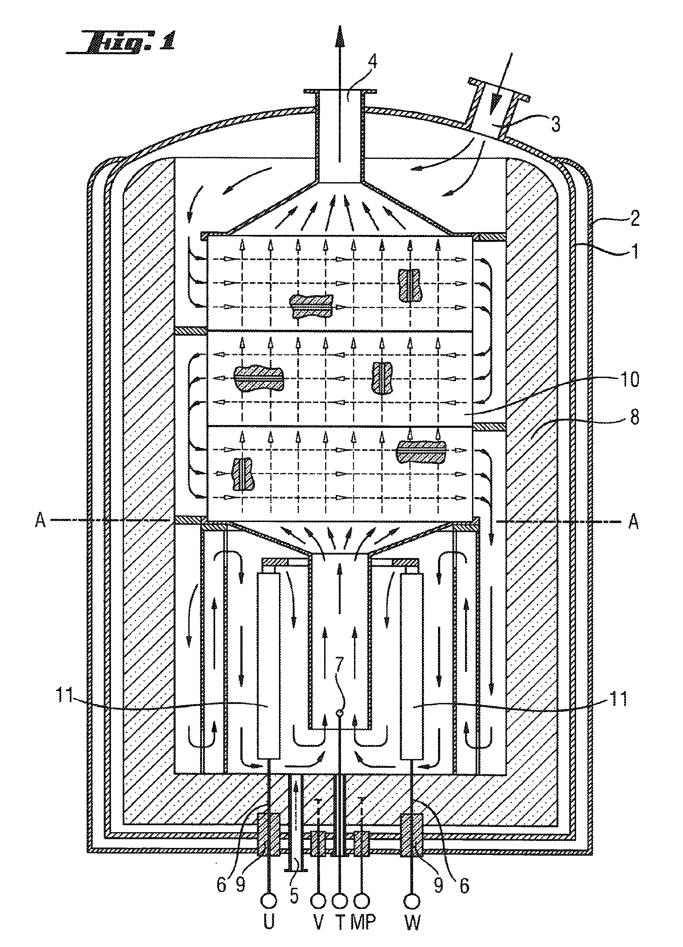

Das erfindungsgemäße Verfahren wird vorzugsweise in einem Reaktor, wie er aus US 4536642 A bekannt ist, durchgeführt. Ein vorzugsweise verwendeter Reaktor ist in Fig. 1 dargestellt. Er besteht aus einem mit einer Kühlung in Form eines Doppelmantels (2) für das Kühlmedium versehenen druckfesten, zylindrischen Metallgehäuse (1) mit einer Gaseinlass- (3) und Gasauslassöffnung (4) sowie zwischen diesen Öffnungen angeordneten, durch direkten Stromdurchgang beheizten, in einem symmetrischen Mehrphasen-Wechselstromsystem in Stern geschalteten, inerten Widerstandsheizern (11), welche mit ihren auf Temperatur gebrachten Flächen Räume begrenzen oder besetzen, die von den aufzuheizenden Gasen durchströmt werden, wobei alle Widerstandsheizer im Gehäuse aufrecht angeordnet und an ihrem oberen Ende elektrisch leitend miteinander verbunden sowie an ihrem unteren Ende jeweils mit elektrischen Zuleitungen (6), welche durch gegenüber dem Gehäuse (1) und Kühlung (2) isolierte Öffnungen (9) durch die Bodenplatte führen, versehen sind, wobei die Widerstandsheizer (11) aus miteinander verbundenen zwangsdurchströmten Rohren oder Zylindern bestehen, die in einem elektrisch leitendem Sammler mit Übergang zum Gasauslass enden, wobei zwischen der Anordnung der Widerstandsheizer (11) und der Gasauslassöffnung (4) im Gehäuse eine Wärmeaustauschereinheit (10) aus elektrisch unbeheizten Gasableitungen eingepasst ist und durch die Bodenplatte ferner eine Temperaturmesseinrichtungen (T/7) sowie eine zusätzliche Gaseintrittsöffnung (5) in den Reaktor münden und sich zwischen Metallgehäuse (1) und Widerstandsheizern (11) bzw. Wärmeaustauschereinheit (10) eine Hochtemperaturwärmeisolierung (8) befindet.

Ein erfindungsgemäßer Reaktor zeichnet sich insbesondere dadurch aus, dass die Oberflächen des Reaktors, die mit einem Eduktgas oder einem Produktgas in Kontakt kommen, mit einer in situ gebildeten Schicht aus SiC versehen sind.

Für das Metallgehäuse können alle im Apparatebau gängigen temperatur- und druckbeständigen Stähle, beispielsweise Edelstähle, verwendet werden.

Als Kühlmedium können alle gängigen Kühlmittel, beispielsweise auch kostengünstiges Kühlwasser, eingesetzt werden.

Die für das erfindungsgemäße Verfahren notwendigen hohen Temperaturen setzen zum Schutz des Metallgehäuses eine Hochtemperaturwärmeisolierung (8) in dessen Inneren voraus. Sie besteht vorzugsweise aus temperatur- und korrosionsbeständigen Materialien, vorzugsweise aus Graphitfilz oder Graphitfolie, die lagenweise angeordnet sind. Bei der jeweils äußeren Lage handelt es sich vorzugsweise immer um eine besonders gut die Wärmestrahlung reflektierende Graphitfolie.

Um den Energieeinsatz so effektiv als möglich zu gestalten, ist der Reaktor in eine Wärmeaustausch- und Reaktionszone aufgeteilt (Fig. 1 oberhalb bzw. unterhalb Linie A-A). Innerhalb der Wärmeaustauschzone ist der Wärmetauscher vorzugsweise so angeordnet, dass er einen optimalen Wärmeaustausch zwischen dem ausströmenden, heißen Reaktionsabgas/Produktgas und dem einströmenden, kalten Eduktgas gewährleistet.

Der Wärmetauscher besteht dabei vorzugsweise aus einem inerten Material. Er ist mit unzählig vielen im Kreuzstrom angeordneten Bohrungen versehen, wobei der Durchmesser der Bohrungen zwischen 1 - 30mm variieren kann. Vorteilhaft haben sich dabei Bohrungen < 15 mm erwiesen. Vorzugsweise wird ein Graphitwerkstoff für den Wärmetauscher verwendet.

Zur Effizienzsteigerung des Wärmeaustauschers kann dieser aus einzelnen Teilen bestehen, die dann vorzugsweise zu einer zylindrischen Gesamteinheit zusammengesetzt sind. Bevorzugt ergeben 1 - 20 solcher Teile eine Gesamteinheit, die sich anhand der stehenden Anordnung und konstruktiven Ausführung durch einen zu vernachlässigenden Blindstrom auszeichnet.

Das ausströmende Gas verlässt den Reaktor gekühlt zur weiteren Kondensation und das aus der Wärmeaustauschzone strömende Eduktgas gelangt entsprechend vorgewärmt und gleichmäßig verteilt unmittelbar in die Reaktionszone, in der es mit den symmetrisch angeordneten Heizelementen (11) direkt kontaktiert. Die Heizelemente sind als Platten, Lamellen, Stäbe oder Röhren mit und ohne zusätzliche radiale Öffnungen ausgeführt und können als Gruppe von 5 bis 50 angeordnet sein.

Gegenüber dem Verfahren ohne in-situ Beschichtung reicht eine geringere Anzahl von Heizelementen aus, da diese nach der Beschichtung bei höherer Temperatur betrieben werden können. Vorteilhaft hat sich aufgrund der größeren kontaktierenden Oberfläche die Verwendung von Rohren als Heizelemente herausgestellt, die mit radialen Bohrungen versehen sein können. Um eine homogene Temperaturverteilung zu erhalten, sind die Heizelemente anhand ihres vorher ermittelten Widerstandes so angeordnet, dass diese, bezogen auf die Widerstandsverteilung im Heizerkreis, symmetrisch angeordnet sind.

Die Heizelemente sind als elektrische Widerstandsheizung ausgeführt und bestehen, ebenso wie der Wärmetauscher, bevorzugt aus Graphit oder anderen Materialien auf Kohlenstoffbasis. Vorzugsweise wird Graphit in isostatischer oder in stranggepresster Form oder in Form von faserverstärktem Grafit (CFC) verwendet. Eine unterschiedliche Porosität des verwendeten Materials wird durch den Beschichtungsvorgang vorteilhaft vergleichmäßigt.

Über die zusätzliche Gaseinlassöffnung (5) im unteren Bereich des Reaktors besteht die Möglichkeit zur zusätzlichen Einspeisung von Eduktgas. Die Stromzuführungen zu den Heizelementen sind vorzugsweise mit Kühlmöglichkeiten und elektrisch isolierenden Einbauteilen (9) ausgerüstet. Diese Isolatoren bestehen ebenfalls aus chemisch inerten Materialien. Sie können aus Kunststoffen, Keramiken oder Quarz bestehen, wobei vorzugsweise PTFE und Quarz bzw. eine Kombination beider Werkstoffe zum Einsatz kommt.

Für die Reaktionsführung während der in-situ-Beschichtung ist eine genaue Temperaturerfassung sehr wünschenswert. Vorteilhaft hat sich dazu ein Messsystem erwiesen, das eine Temperaturermittlung auch > 1600°C zulässt und innerhalb der Reaktionszone die Gastemperatur der Reaktionskomponenten ohne zeitliche Verzögerung erfasst. Das Messsystem ragt in die Reaktionszone und besteht aus einem inerten Material, welches einen chemischen Angriff unterbindet. Solche Werkstoffe sind vorzugsweise Materialien auf Basis von Siliciumcarbid oder -nitrid.

Im Reaktor ist ferner eine zusätzliche Einspeisestelle direkt in die Reaktionszone für Edukte (Chlorsilane bzw. Wasserstoff) vorgesehen, um damit die Reaktionsparameter vorteilhaft beeinflussen zu können. Hierdurch wird es möglich, Edukte direkt, unter Umgehung der Wärmetauscherzone, in den Reaktionsraum einzuspeisen. Diese Verfahrensweise ist besonders dann vorteilhaft, wenn man verunreinigte Edukte einsetzen möchte, welche ggf. zu Ablagerungen im Wärmetauschersystem führen könnten.

Mit dem beschriebenen Reaktor zeigten sich die wesentlichen Vorteile des erfindungsgemäßen Verfahrens gegenüber einem Verfahren ohne vorherige in situ-Beschichtung.

Mit dem erfindungsgemäßen Verfahren kann der Reaktor gegenüber bekannten Standardverfahren bei höheren Temperaturen betrieben werden, ohne dass hierbei mit einem chemischen Angriff auf die Grafitbauteile zu rechnen ist. Dadurch steigt beispielsweise für die Hydrierung von STC die Ausbeute des Zielproduktes TCS an.

Überraschend wurde gefunden, dass trotz der erhöhten Temperatur die insitu-beschichteten Heizelemente und Bauteile eine wesentlich längere Standzeit aufweisen als bekannte Heizelemente. In analytischen Untersuchungen zeigte sich, dass die Korrosion des Grafits durch den Angriff von Wasserstoff, HCl und Chlorsilanen bei den in-situ-beschichteten Bauteilen wesentlich verringert ist. Beispielsweise werden bei STC-Hydrierung weitaus geringere Anteile von Reaktionsprodukten, die durch die Reaktion des Grafits entstehen, z. B. Methyldichlorsilan und Methyltrichlorsilan, gefunden.

Auch die unerwünschte Abscheidung von Silicium auf den Heizern oder Bauteilen führt nicht mehr zu einer Zerstörung der Bauteile, da das Silicium nicht durch die SiC-Schutzschicht in den Grafit diffundiert.

Dies kann nunmehr für eine weitere vorteilhafte Auslegung der Reaktionsparameter genutzt werden. Da der Reaktor einen größeren Temperaturgradienten aufweisen kann, kann das heiße Reaktionsgas schneller abgekühlt werden. Dadurch wird die unerwünschte Rückreaktion zum Ausgangsprodukt in kälteren Reaktionszonen vermieden und die Ausbeute des Zielproduktes gesteigert. Dies wirkt sich besonders vorteilhaft aus, wenn die Abkühlzeit von Reaktionstemperatur auf < 700°C im beschriebenen Reaktor weniger als 0,1 s beträgt. Die in-situ-Beschichtung erwies sich auch hier als vorteilhaft, da die freien Grafitoberflächen die Rückreaktion noch katalysierten. Die Beschichtung mit beispielsweise SiC erwies sich als katalytisch inaktiv.

Figur 1 zeigt eine Ausführungsform eines Reaktors, wie er auch in den Beispielen verwendet wurde.

Die folgenden Beispiele dienen der weiteren Erläuterung der Erfindung.

### Beispiel 1

In einem Reaktor gemäß Fig. 1 wurde als erste Verfahrensstufe die Beschichtung mit einem Chlorsilan/H₂-Gemisch durchgeführt. Anhand der Änderung des Widerstandes der Heizelemente wurde der Fortschritt der Beschichtung kontrolliert. Zunächst wurde der Reaktor bei einem Wasserstoffdurchfluss von 150 m³/h bei nur geringem Überdruck (1,5 bar)auf Zieltemperatur (1300°C) gebracht. Danach wurde das Chlorsilan eingespeist. Innerhalb von 48 h wurde der Durchsatz an Wasserstoff auf bis zu 1500 m³/h und Chlorsilan auf bis zu 5 t/h gesteigert. Innerhalb dieser Zeit wurde auch der Druck auf 6 bar gesteigert. Als Edukte wurden Siliciumtetrachlorid und aufgereinigter Wasserstoff aus der TCS-Synthese verwendet.
Die Beschichtung wurde nach ca. 72 h beendet. Es wurden Probekörper entnommen und wie in Beispiel 3 beschrieben hinsichtlich ihrer chem. Beständigkeit untersucht.
Die SiC-Schichtdicke auf den Bauelementen betrug 10 - 100 µm (je nach Temperatur an der lokalen Abscheidestelle). Mittels IR-Spektroskopie wurde nachgewiesen, dass es sich hierbei um SiC handelt.

### Beispiel 2

Ein gemäß Beispiel 1 beschichteter Reaktor sowie zu Vergleichszwecken ein Reaktor mit unbeschichteten Bauteilen aus Grafit, wie er in Beispiel 1 eingesetzt wurde, wurde unter folgenden Bedingungen zur Hydrierung von SiCl₄ eingesetzt:
Reaktortemperatur 900°C, Druck 5 bar, Molverhältnis H₂:SiCl₄ = 2:1, SiCl₄-Durchsatz 8 t/h.
Der Reaktor mit den unbeschichteten Bauteilen musste nach weniger als 6 Monaten Laufzeit abgestellt werden. Der Reaktor mit den beschichteten Bauteilen wurde nach 12 Monaten abgestellt. Im Vergleich beider Reaktoren nach Ende der Laufzeit wurde festgestellt:
Die unbeschichteten Bauteile wiesen erhebliche Korrosion auf und mussten verworfen werden. Die beschichten Bauteile zeigten kaum Korrosion und konnten für den nächsten Einsatz wieder verwendet werden.
Die Standzeit der beschichteten Reaktorbauteile hat sich gegenüber den Bauteilen des Vergleichsreaktors mehr als verdoppelt. Der spezifische Energieverbrauch pro erzeugter Menge an TCS hat sich um ca. 20 % verringert.
Der Eintrag von Verunreinigungen im erhaltenen Reaktionsprodukt hat sich drastisch verringert (Methyltrichlorsilan von 200 ppm auf ca. 20 ppm).
Im Reaktor, in dem das erfindungsgemäße Verfahren ausgeübt wurde, konnte die Temperatur problemlos bis 1100°C gesteigert werden und damit unter diesen Bedingungen eine um 30 % höhere Trichlorsilanausbeute erzielt werden.

### Beispiel 3:

Die in-situ-beschichteten Probekörper wurden in dem Reaktor hergestellt (siehe Bsp. 1). Sie sollten mit anderen Probekörpern verglichen werden.
Dazu wurden in einem Reaktor gemäß Fig. 1 Probekörper aus verschiedenen Materialien eingebracht, um unter den Bedingungen der Hydrierung von SiCl₄ ihre chemische Beständigkeit zu untersuchen (1000°C, H₂:SiCl₄=2:1, Versuchsdauer 3 Monate).

Aus den Veränderungen der Oberflächenstruktur sowie dem Massenverlust der Probekörper wurde die chemische Beständigkeit abgeschätzt. Die Ergebnisse sind in Tab. 1 zusammengefasst.

**Tab. 1**

| Probekörper | Gewichtsveränderung | Oberfläche |
|---|---|---|
| In-situ-beschichtete Grafitteile aus Beispiel 1 | + 2,1 % | Unverändert |
| SiC-vorbeschichte Grafitteile | + 0,9 % | Unverändert |
| Grafit | + 24 % (durch Si-Aufnahme) | SiC-Abscheidung |
| Grafit/Grafitfaser | - 40 % (teilweise Si-Aufnahme, teilweise Zersetzung) | SiC-Abscheidung |
| Keramik auf SiO₂-Basis | - 100 % | Vollständig zersetzt |
| Keramik auf Al₂O₃- Basis | - 100 % | Vollständig zersetzt |

Es wurde hinsichtlich ihrer chem. Beständigkeit kein Unterschied zwischen den mit SiC vorbeschichteten und den im ersten Schritt des erfindungsgemäßen Verfahrens hergestellten in-situ-beschichteten Probekörpern gefunden. Gegenüber den Bauteilen auf Grafitbasis wurden ein geringerer Massenverlust und damit eine höhere chemische Beständigkeit beobachtet. Auch den Probekörpern aus Grafit oder Grafit/Grafitfaser bildete sich zwar teilweise eine SiC-Schicht aus, diese war allerdings unregelmäßig, sodass an diesen Probekörpern eine Korrosion stattfinden konnte. Speziell an Kontaktstellen zwischen der SiC-Schicht und der freien Grafitoberfläche wurde das Material stark angegriffen und es bildeten sich teilweise Risse aus.

## Patentansprüche

1. Verfahren zur Hydrierung eines Chlorsilans der allgemeinen Formel RₙSiCl₄₋ₙ wobei R Wasserstoff bedeutet und n 0, 1, 2 oder 3 ist, in einem Reaktor umfassend eine Reaktionskammer mit einer Oberfläche, die mit dem Chlorsilan in Kontakt kommt und ein durch direkten Stromdurchgang beheiztes Heizelement mit einer Oberfläche, die mit dem Chlorsilan in Kontakt kommt, wobei die Reaktionskammer und das Heizelement aus Graphit bestehen, **dadurch gekennzeichnet, dass** in einem ersten Verfahrensschritt ein Chlorsilan der allgemeinen Formel RₙSiCl₄₋ₙ wobei R Wasserstoff bedeutet und n 0, 1, 2 oder 3 ist sowie Wasserstoff mit der Oberfläche der Reaktionskammer und der Oberfläche des Heizelements derart in Kontakt gebracht wird, dass sich auf der Oberfläche der Reaktionskammer und der Oberfläche des Heizelements in situ eine SiC-Beschichtung bildet und in einem zweiten Verfahrensschritt eine Hydrierung des Chlorsilans durch ein Erhitzen eines Chlorsilan / Wasserstoff-Gemischs in der Reaktionskammer mittels des Heizelements erfolgt, wobei der erste Verfahrensschritt bei einer Reaktionstemperatur durchgeführt wird, die höher ist als die Reaktionstemperatur im zweiten Verfahrensschritt.

2. Verfahren gemäß Anspruch 1, **dadurch gekennzeichnet, dass** das Chlorsilan und der Wasserstoff im ersten Verfahrensschritt dem Reaktor in einem Molverhältnis (Silan:Wasserstoff) von 2:1 bis 1:10, vorzugsweise in einem Molverhältnis 2:1 bis 1:2, zugeführt werden.

3. Verfahren gemäß Anspruch 1 oder 2, **dadurch gekennzeichnet, dass** der erste Verfahrensschritt bei einer Reaktortemperatur von > 1000°C, vorzugsweise bei einer Reaktortemperatur von 1000 bis 1600°C stattfindet.

4. Verfahren gemäß einem der Ansprüche 1 bis 3, **dadurch gekennzeichnet, dass** der erste Verfahrensschritt bei Drücken von 1 - 20 bar, vorzugsweise von 1 - 5 bar, durchgeführt wird.

5. Verfahren gemäß einem der Ansprüche 1 bis 4, **dadurch gekennzeichnet, dass** der erste Verfahrensschritt über eine Messung des elektrischen Widerstandes der Heizelemente geregelt und gesteuert wird.

6. Verfahren gemäß einem der Ansprüche 1 bis 5, **dadurch gekennzeichnet, dass** der zweite Verfahrensschritt vorzugsweise bei Temperaturen von 700 - 1400°C, vorzugsweise bei 900 - 1200°C erfolgt.

7. Verfahren gemäß einem der Ansprüche 1 bis 6, **dadurch gekennzeichnet, dass** der zweite Verfahrensschritt bei einer niedrigeren Temperatur und einem höhereren Druck als der erste Verfahrensschritt durchgeführt wird.

8. Verfahren gemäß einem der Ansprüche 1 bis 7, **dadurch gekennzeichnet, dass** die Edukte Chlorsilan und Wasserstoff im zweiten Verfahrensschritt in einem Verhältnis eingesetzt werden, bei dem der Wasserstoff im Überschuss vorliegt, bevorzugt in einem Verhältnis Wasserstoff:Chlorsilan von 1,5:1 bis 5:1.

9. Verfahren gemäß einem der Ansprüche 1 bis 8, **dadurch gekennzeichnet, dass** im ersten Verfahrensschritt und im zweiten Verfahrensschritt die gleichen Edukte eingesetzt werden.

## Claims

1. Process for the hydrogenation of a chlorosilane of the general formula RₙSiCl₄₋ₙ, where R is hydrogen and n is 0, 1, 2 or 3, in a reactor comprising a reaction chamber having a surface which comes into contact with the chlorosilane and a heating element which is heated by direct passage of electric current and has a surface which comes into contact with the chlorosilane, with the reaction chamber and the heating element comprising graphite, **characterized in that** a chlorosilane of the general formula RₙSiCl₄₋ₙ, where R is hydrogen and n is 0, 1, 2 or 3, and hydrogen are brought into contact with the surface of the reaction chamber and the surface of the heating element in such a way that an SiC coating is formed in situ on the surface of the reaction chamber and the surface of the heating element in a first process step and hydrogenation of the chlorosilane is effected by heating of a chlorosilane/hydrogen mixture in the reaction chamber by means of the heating element in a second process step, with the first process step being carried out at a reaction temperature which is higher than the reaction temperature in the second process step.

2. Process according to Claim 1, **characterized in that** the chlorosilane and the hydrogen are fed into the reactor in a molar ratio (silane:hydrogen) of from 2:1 to 1:10, preferably in a molar ratio of from 2:1 to 1:2, in the first process step.

3. Process according to Claim 1 or 2, **characterized in that** the first process step takes place at a reactor temperature of > 1000°C, preferably at a reactor temperature of from 1000 to 1600°C.

4. Process according to any of Claims 1 to 3, **characterized in that** the first process step is carried out at pressures of 1-20 bar, preferably 1-5 bar.

5. Process according to any of Claims 1 to 4, **characterized in that** the first process step is regulated and controlled via measurement of the electric resistance of the heating elements.

6. Process according to any of Claims 1 to 5, **characterized in that** the second process step is preferably carried out at temperatures of 700-1400°C, preferably 900-1200°C.

7. Process according to any of Claims 1 to 6, **characterized in that** the second process step is carried out at a lower temperature and a higher pressure than the first process step.

8. Process according to any of Claims 1 to 7, **characterized in that** the starting materials chlorosilane and hydrogen are used in a ratio at which the hydrogen is present in excess, preferably in a ratio of hydrogen:chlorosilane of from 1.5:1 to 5:1, in the second process step.

9. Process according to any of Claims 1 to 8, **characterized in that** the same starting materials are used in the first process step and in the second process step.

## Revendications

1. Procédé d'hydrogénation d'un chlorosilane de formule générale RₙSiCl₄₋ₙ, dans laquelle R signifie l'hydrogène et n est 0, 1, 2 ou 3, dans un réacteur qui comprend une chambre de réaction ayant une surface qui rentre en contact avec le chlorosilane et un élément de chauffage chauffé par passage de courant direct ayant une surface qui rentre en contact avec le chlorosilane, la chambre de réaction et l'élément de chauffage étant constitués de graphite, **caractérisé en ce que** lors d'une première étape de procédé, un chlorosilane de formule générale RₙSiCl₄₋ₙ, dans laquelle R signifie l'hydrogène et n est 0, 1, 2 ou 3, ainsi que de l'hydrogène sont mis en contact avec la surface de la chambre de réaction et la surface de l'élément de chauffage de manière à ce qu'un revêtement de SiC se forme in situ sur la surface de la chambre de réaction et sur la surface de l'élément de chauffage, et, lors d'une seconde étape de procédé, une hydrogénation du chlorosilane a lieu par chauffage d'un mélange chlorosilane/hydrogène dans la chambre de réaction au moyen de l'élément de chauffage, la première étape de procédé étant réalisée à une température de réaction qui est supérieure à la température de réaction lors de la seconde étape de procédé.

2. Procédé selon la revendication 1, **caractérisé en ce que** le chlorosilane et l'hydrogène sont introduits dans le réacteur lors de la première étape de procédé en un rapport molaire (silane:hydrogène) de 2:1 à 1:10, de préférence en un rapport molaire de 2:1 à 1:2.

3. Procédé selon la revendication 1 ou 2, **caractérisé en ce que** la première étape de procédé a lieu à une température du réacteur > 1 000 °C, de préférence à une température du réacteur de 1 000 à 1 600 °C.

4. Procédé selon l'une quelconque des revendications 1 à 3, **caractérisé en ce que** la première étape de procédé est réalisée à des pressions de 1 à 20 bar, de préférence de 1 à 5 bar.

5. Procédé selon l'une quelconque des revendications 1 à 4, **caractérisé en ce que** la première étape de procédé est régulée et commandée par une mesure de la résistance électrique des éléments de chauffage.

6. Procédé selon l'une quelconque des revendications 1 à 5, **caractérisé en ce que** la seconde étape de procédé a de préférence lieu à des températures de 700 à 1 400 °C, de préférence de 900 à 1 200 °C.

7. Procédé selon l'une quelconque des revendications 1 à 6, **caractérisé en ce que** la seconde étape de procédé est réalisée à une température plus basse et à une pression plus élevée que la première étape de procédé.

8. Procédé selon l'une quelconque des revendications 1 à 7, **caractérisé en ce que** les réactifs chlorosilane et hydrogène sont utilisés lors de la seconde étape de procédé en un rapport tel que l'hydrogène est présent en excès, de préférence en un rapport hydrogène:chlorosilane de 1,5:1 à 5:1.

9. Procédé selon l'une quelconque des revendications 1 à 8, **caractérisé en ce que** les mêmes réactifs sont utilisés lors de la première étape de procédé et lors de la seconde étape de procédé.
